# EUROPEAN PATENT SPECIFICATION

(11) **EP 0 520 589 B1**
(45) Date of publication and mention of the grant of the patent: **07.06.1995**
(21) Application number: 92201918.7
(22) Date of filing: 26.06.1992
(51) Int. Cl.: B65D 88/76, B65D 88/62, B09B 1/00

(54) **Storage reservoir for environmentally harmful liquids and method of making such storage reservoir**
Lagerbehälter für umweltschädliche Flüssigkeiten und Verfahren zum Herstellen eines derartigen Behälters
Réservoir de stockage pour liquides dangereux pour l'environnement et procédé pour la fabrication d'un tel réservoir

(30) Priority: 28.06.1991 NL 9101129
(43) Date of publication of application: 30.12.1992
(73) Proprietor: Coöperatieve Verkoop- en Productievereniging van Aardappelmeel en Derivaten 'AVEBE' B.A., NL-9641 JA Veendam (NL)
(72) Inventor: De Vries, Johannes, NL-9481 GE Vries (NL)
(74) Representative: Smulders, Theodorus A.H.J., Ir.

(56) References cited:
- DE-A- 3 513 241
- DE-B- 1 300 064
- FR-A- 2 102 870
- US-A- 1 909 484
- US-A- 3 052 380

## Description

This invention relates to a storage reservoir for environmentally harmful liquids, which storage reservoir comprises an excavated basin provided with a bottom foil; a second foil which is provided above the bottom foil; and at least one pipe for supplying and draining the liquids to be stored, wherein the at least one pipe has at least one outlet and inlet opening between the bottom foil and the second foil for respectively supplying and draining the liquid to be stored to and from the space between the bottom foil and the second foil.

The invention also relates to a method of making a storage reservoir for environmentally harmful liquids, wherein a basin of a suitable depth is excavated; a bottom foil is arranged in the basin, which foil is provided with connections for at least one supply and drain pipe; the circumferential edge of the bottom foil is secured along the upper edge of the basin; a top foil is arranged; the circumferential edge of the top foil is secured along the upper edge of the basin.

Such a storage reservoir is known from FR-A-2,102,870.

It is known technology to store environmentally harmful liquids in excavated basins provided with a bottom foil. In addition, the basin is often covered with a covering foil, in particular when the liquid has a strong odour.

Such a storage method presents a problem in that it is very difficult to retain the covering foil in the proper position. This is a consequence of wind loads, whereby the covering foil tends to form folds and float to one side of the basin and/or tear. A second cause is the variation in the levels occurring in a basin that is actively used. A third cause is the formation of blisters caused by gases released from the liquid.

The bottom foil, in turn, should be prevented from coming off the floor of the basin as a consequence of the groundwater pressure and gases released from the earth. To that end, the floor of the basin is normally located above the highest groundwater level. This often requires that considerable amounts of earth be supplied from elsewhere to enable the building of the embankments which are to serve as walls of the basin.

Further, in most cases a layer of ballast material is provided on the bottom foil, which reduces the volume of the basin and entails additional costs.

The object of the present invention is to overcome the drawbacks outlined and more generally to provide an effective and reliable storage reservoir for environmentally harmful liquids, which is particularly suitable for the temporary storage of very large quantities of such environmentally harmful liquids.

To that end, according to the invention, a storage reservoir of the type described hereinabove is characterized in that in use a water mass of clean water is provided on the second foil; and that means are provided for keeping the level of the water mass substantially constant relative to a floor of the basin.

In US-A-1,909,484 a storage reservoir is described having a flexible roof with a water seal above the roof. When the storage reservoir is emptied, the roof will drop accordingly together with the water seal.

Furthermore, in DE-A-3,513,241 a storage reservoir is described having a flexible roof and gas discharge means to discharge gasses from the storage reservoir.

A method of making a storage reservoir for environmentally harmful liquids is characterized in that the earth dug up during excavation is at least partly used to form an embankment around the basin;
that between the top foil and the bottom foil, adjacent the circumferential edges thereof, gas discharge means are arranged;
that in the central area of the top foil at least one ballast element is arranged; and
that a water mass is provided on the top foil to a predetermined level relative to a floor of the basin.

It is observed that U.S. patent specification 3,052,380 discloses a device for storing mineral oil products, which device also comprises an excavated basin provided with a bottom foil. Arranged in the known basin is a liquid container which is entirely closed except for supply and drain pipes, is made of flexible synthetic material and can be filled with the liquid to be stored. In filled condition, the shape of the liquid container is complementary to that of the basin. In partly filled or empty condition, the liquid container floats on a water mass provided at the bottom of the basin. In all cases, therefore, the top wall of the liquid container is exposed directly to atmospheric influences and weather influences. According to the invention, by contrast, the top foil is now protected continuously against all such influences.

Hereinafter, the invention will be further described, by way of example, with reference to the accompanying drawings showing one embodiment.
Fig. 1 is a schematic sectional view of an example of a storage reservoir according to the invention in filled condition;
Fig. 2 is a schematic sectional view of the reservoir of Fig. 1 in half-empty condition;
Fig. 3 is a schematic sectional view of the reservoir of Fig. 1 in empty condition;
Fig. 4 is a schematic view of an example of a gas discharge pipe for a reservoir according to the invention; and
Fig. 5 is a schematic view of a variant of Fig. 4.

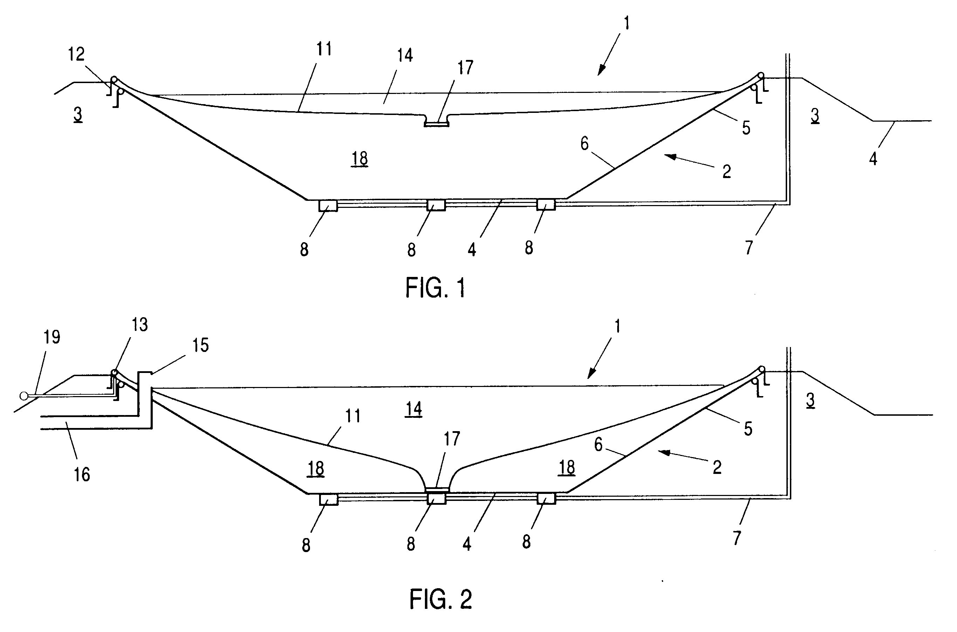

The storage reservoir 1 shown in the drawings comprises an excavated basin 2 bounded by an embankment 3 provided around the basin. The embankment 3 can to advantage be formed from the earth dug up during the excavation of the basin. As will appear from the following, with a storage reservoir according to the invention it is not necessary to arrange the floor of the basin at a level above the highest groundwater level, so that one is entirely free to chose the dimensions and the depth of the basin such that the embankment 2 can in fact be formed with the earth dug up during the excavation of the basin. Thus, unnecessary transportation of sand can be avoided. The ground level is indicated at 4 in Fig. 1.

In the example shown, the basin has a flat bottom with adjoining walls 5 extending, not too steeply, in upward and outward direction. Arranged in the basin is a bottom foil 6, preferably confectioned on site, disposed on the bottom and against the sidewalls up to a level equal or very close to that of the upper edge of the basin. For the sake of clarity, in the drawings the bottom foil 6 is shown to extend to a point slightly below the edge of the basin. The bottom foil comprises one or more connections to one or more supply and drain pipes. In the example shown, one supply and drain pipe for the liquid to be stored is shown at 7 and three connections are schematically shown at 8 in the area of the flat bottom 4.

In the example shown, the bottom foil, along the upper edge thereof, has a peripheral strip 9 folded over a tubular or otherwise appropriately shaped circumferential support member 10 following the upper edge of the basin and the peripheral strip has been dug into the embankment. However, the bottom foil can also be attached to the top foil to be described hereinafter, for instance by welding, and/or be dug into the earth together with the top foil through a turned-over peripheral strip.

The edges of one foil or both foils may also be reinforced and provided with attaching eyes and be secured to a concrete or metal anchoring construction, which may or may not be incorporated into the embankment.

The top foil is indicated at 11 and it is likewise preferred that it be confectioned on site. In the example shown, the top foil has a peripheral strip 12 folded over a circumferential support member 13 and dug into the embankment 3. As noted above, the support member 13 can be the same support member as the support member 10 of the bottom foil.

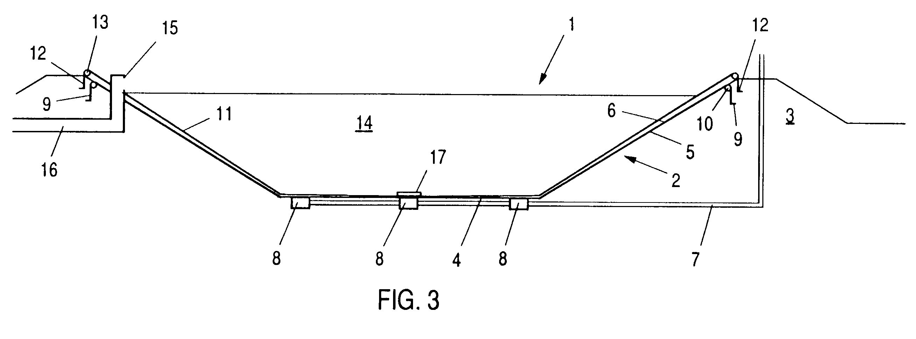

In empty condition of the reservoir, i.e., the condition in which the reservoir does not contain any liquid to be stored, the top foil is disposed on top of the bottom foil, as shown in Fig. 3. Provided on top of the top foil is a water mass 14 of clean, at least ecologically sound, water. The top foil is therefore not exposed to weather influences, in particular influences of sunlight and wind.

The water mass 14 fills up the basin to a maximum level determined by an overflow schematically shown at 15. The overflow comprises one or more supply and drain pipes 16 for water, enabling the liquid in the reservoir to be maintained at a constant level. To that end, for instance a water level detector can be arranged in the overflow or at another point, which detector can for instance control a water supply valve or a pump. As a level detector, a simple float can be used. The overflow can comprise a plurality of vertical tubes, but can also comprise a gutter extending along at least a part of the circumferential edge of the basin, which gutter can optionally serve as an attaching member for the bottom foil and/or the top foil.

Owing to the presence of the water mass 14, the bottom foil is sufficiently loaded to prevent it from coming off the floor of the basin due to groundwater pressure or gases released from the earth.

If the reservoir is to be filled, the liquid to be stored is supplied between the bottom foil and the top foil via the pipe(s) 7 and the connections 8. The volume of the space between the top foil and the bottom foil increases gradually. To keep the top foil tensioned as the reservoir is being filled or emptied, the top foil has been weighted in the central area thereof by means of a ballast element 17 placed on the foil. The ballast element may for instance be a (reinforced) concrete strip or disc.

According as the volume between the top foil and the bottom foil increases, the water mass on top of the top foil diminishes, inasmuch as water is drained via the overflow 15 and the pipe(s) 16 connected thereto.

The level of the water mass 14 does not change during this operation, so that the pressure on the bottom foil remains substantially constant and is independent of the extent to which the reservoir is filled with the liquid to be stored.

Fig. 2 shows the reservoir in approximately half-empty condition. The mass of liquid to be stored is indicated at 18. Any gases being released from the liquid 18 collect between the bottom foil and the top foil along the upper edge thereof. This is promoted by the ballast element which ensures that the underside of the top foil always forms a guide surface for the gas bubbles, sloping upwards from the middle to the edge. At the edge of the two foils, a gas discharge pipe system is arranged between the foils, which system may for instance be an apertured ring line connected to one or more exhaust pipes.

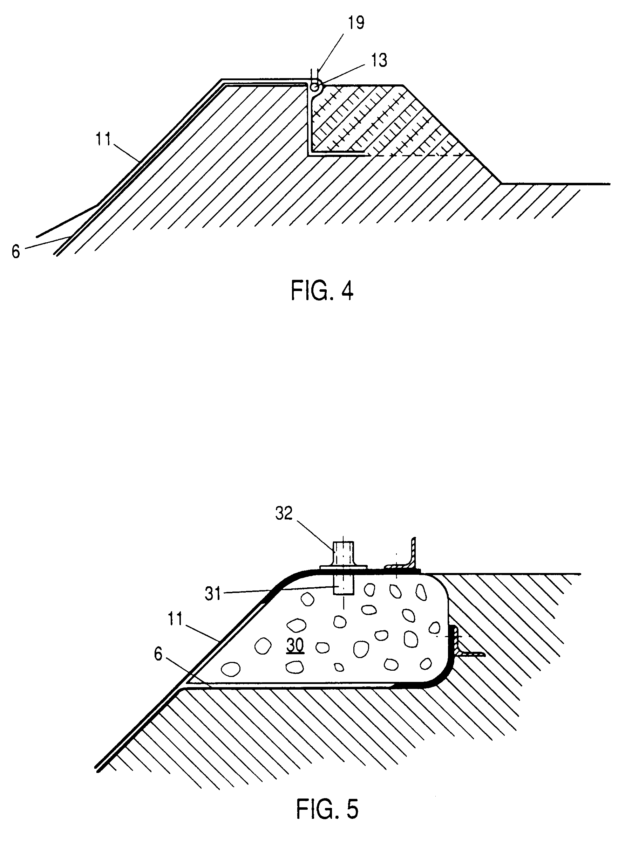

The ring line can advantageously form the circumferential support member 13, as shown in Fig. 2. At 19 in Fig. 2 a gas exhaust pipe is shown which has been passed under the dug-in edge of the top foil. Fig. 4 shows an alternative embodiment in which the line 19 has been passed through the top foil using standard aids, which are known per se. If the support member 13 of the top foil and the support member 10 of the bottom foil have been combined into a single support member for the two foils and this single support member at the same time forms the ring line for gas discharge, a plurality of passages for the gas to be discharged must be provided in the bottom foil, these passages aligning with openings in the ring line.

The maximum liquid level as determined by the overflow 15 must be below the level of the gas discharge openings in the ring line. Naturally, if so desired, a separate gas discharge ring line may be used that does not at the same time form a circumferential support member. It is also possible to insert a plurality of gas discharge tubes through the bottom foil or through the top foil to enable the discharge of gas from the space above the liquid between the bottom foil and the top foil.

Fig. 1 shows the reservoir in filled condition. In filled condition, too, there is still a mass of water disposed on the top foil, so that the top foil is not exposed to wind loads or other weather influences.

When emptying the reservoir via the pipe system 7, the amount of liquid 18 gradually diminishes and the water mass 14 is supplemented until finally the situation of Fig. 3 has been reached again.

A storage reservoir according to the invention is particularly suitable for storage of large quantities of environmentally harmful liquids such as may be produced in for instance the potato starch industry but also in other places. The storage capacity could for instance be of the order of 1000-500,000 m³.

Any gases that have been produced cannot form large bubbles under the top foil and thereby force the top foil upwards, but can be collected directly and, if necessary, be treated to prevent nuisance because of the stench.

Inasmuch as the liquid pressure on the bottom foil remains constant regardless of the extent to which the reservoir is filled, the bottom foil cannot come off the floor of the basin and the groundwater level need not be taken into consideration. The depth of the basin can therefore without problems be selected such that the embankment surrounding the basin can be formed from the earth dug up. Finally, the top foil is at all times protected by the water mass disposed thereon.

It is observed that after the foregoing, various modifications will readily occur to those skilled in the art. Hereinabove, reference has already been made to the various ways of anchoring the foil edges and discharging released gases. Also, the liquid supply pipes and the level control system can be constructed in different ways which are known per se. Fig. 5 diagrammatically shows an example of a concrete basin edge 30, which comprises a gas collecting channel 31 which is connected to a gas discharge line system via discharge pipelets 32 which have been passed through the top foil. The bottom foil is disposed under the edge 30 and the top foil has been secured to the edge 30. These and similar modifications are understood to fall within the framework of the invention.

## Claims

1. A storage reservoir for environmentally harmful liquids, which storage reservoir comprises an excavated basin provided with a bottom foil; a second foil which is provided above the bottom foil; and at least one pipe for supplying and draining the liquids to be stored, wherein the at least one pipe has at least one outlet and inlet opening between the bottom foil and the second foil for respectively supplying and draining the liquid to be stored to and from the space between the bottom foil and the second foil; **characterized in that** in use a water mass of clean water is provided on the second foil; and that means are provided for keeping the level of the water mass substantially constant relative to a floor of the basin.

2. A storage reservoir according to claim 1, **characterized in that** in use, the water level is maintained constant independent from the amount of liquid stored in the reservoir.

3. A storage reservoir according to claim 1 or 2, **characterized in that** at the circumferential edge of the bottom foil and the top foil, in between the two foils, at least one gas discharge pipe is arranged for discharging the gases released from the liquid to be stored.

4. A storage reservoir according to claim 1, 2 or 3, **characterized in that** the top foil, in the central area thereof, has been weighted with at least one ballast element.

5. A storage reservoir according to claim 4, **characterized in that** the ballast element is made from concrete.

6. A storage reservoir according to any one of claims 3-5, **characterized in that** the gas discharge pipe comprises a ring line extending along the upper edge of the reservoir.

7. A storage reservoir according to claim 6, **characterized in that** the ring line also forms a support member for the circumferential edge of at least one of the foils.

8. A storage reservoir according to any one of claims 3-7, **characterized in that** the gas discharge pipe comprises a channel formed in a concrete edge, which channel communicates with pipelets which have been passed through at least one of the foils.

9. A storage reservoir according to any one of the preceding claims, **characterized in that** the means for keeping the level of the water mass substantially constant comprise at least one overflow, and at least one drain pipe for water connected thereto and at least one supply pipe for water.

10. A storage reservoir according to any one of the preceding claims, **characterized in that** the means for keeping the level of the water mass substantially constant comprise a float member and water supply means controlled by the float member.

11. A method of making a storage reservoir for environmentally harmful liquids, wherein a basin of a suitable depth is excavated; a bottom foil is arranged in the basin, which foil is provided with connections for at least one supply and drain pipe;
the circumferential edge of the bottom foil is secured along the upper edge of the basin;
a top foil is arranged;
the circumferential edge of the top foil is secured along the upper edge of the basin,
**characterized in that** the earth dug up during excavation is at least partly used to form an embankment around the basin; that between the top foil and the bottom foil, adjacent the circumferential edges thereof, gas discharge means are arranged;
that in the central area of the top foil at least one ballast element is arranged; and
that a water mass is provided on the top foil to a predetermined level relative to a floor of the basin.

12. A method according to claim 11, **characterized in that** the water level is maintained constant independent from the amount of liquid stored in the reservoir.

13. A method according to claim 11 or 12, **characterized in that** at least one of the foils is confectioned on site.

14. A method according to claim 11, 12 or 13, **characterized in that** a peripheral strip of at least one of the foils is folded over a circumferential support member and dug into the earth.

15. A method according to any one of claims 11-14, **characterized in that** the depth and dimensions of the basin are selected such that the excavated earth can be substantially used to form an embankment around the basin, said embankment forming at least partly the sidewalls of the basin.

## Patentansprüche

1. Ein Lagerbehälter für umweltschädliche Flüssigkeiten, umfassend ein ausgehobenes mit einem Bodenbelag versehenes Bassin, ein zweiter Belag ist oberhalb des Bodenbelags ausgebildet und wenigstens ein Rohr zum Zuführen und Ablassen der zu lagernden Flüssigkeiten, worin wenigstens ein Rohr wenigstens eine Ablauf- und Einlauföffnung zwischen dem Grundbelag und dem zweiten Belag jeweils zum Zuführen und Ablassen der zu lagernden Flüssigkeiten in und aus dem Raum zwischen dem Grundbelag und dem zweiten Belag aufweist, dadurch gekennzeichnet, daß während des Gebrauchs eine Wassermasse sauberen Wassers auf der zweiten Folie vorgesehen ist und daß Mittel vorgesehen sind, die die Wassermasse im wesentlichen in bezug auf den Boden des Wassers konstant halten.

2. Lagerbehälter nach Anspruch 1, dadurch gekennzeichnet, daß während des Gebrauchs der Wasserspiegel unabhängig von der im Behälter zu lagernden Flüssigkeit konstant gehalten wird.

3. Lagerbehälter nach Anspruch 1 oder 2, dadurch gekennzeichnet, daß an der Umfangskante des Grundbelags und der des oberen Belags zwischen den beiden Belägen wenigstens ein Gasentladungsrohr zum Entladen der aus der zu lagernden Flüssigkeit freigesetzten Gase angeordnet ist.

4. Ein Lagerbehälter nach Anspruch 1, 2 oder 3, dadurch gekennzeichnet, daß der obere Belag in seiner Zentralfläche mit wenigstens einem Ballastelement beschwert ist.

5. Ein Lagerbehälter nach Anspruch 4, dadurch gekennzeichnet, daß das Ballastelement aus Beton hergestellt ist.

6. Ein Lagerbehälter nach einem der Ansprüche 3 bis 5, dadurch gekennzeichnet, daß das Gasentladungsrohr eine Ringleitung umfaßt, die sich entlang der oberen Kante des Behälters erstreckt.

7. Ein Lagerbehälter nach Anspruch 6, dadurch gekennzeichnet, daß die Ringleitung auch ein Stützmittel für die Umfangskante wenigstens eines Belags bildet.

8. Ein Lagerbehälter nach einem der Ansprüche 3 bis 7, dadurch gekennzeichnet, daß das Gasentladungsrohr einen in einer Betonkante ausgebildeten Kanal umfaßt und dieser Kanal mit Röhren kommuniziert, die durch wenigstens einen der Beläge geführt sind.

9. Ein Lagerbehälter nach einem der vorhergehenden Ansprüche, dadurch gekennzeichnet, daß Mittel zum im wesentlichen Konstanthalten des Wasserspiegels wenigstens einen Überlauf und wenigstens ein Abflußrohr für Wasser damit verbunden und wenigstens ein Zuflußrohr für Wasser umfassen.

10. Ein Lagerbehälter nach einem der vorhergehenden Ansprüche, dadurch gekennzeichnet, daß die Mittel zum im wesentlichen Konstanthalten des Wasserspiegels einen Schwimmer und Wasserzuführungsmittel, die durch den Schwimmer geregelt werden, umfassen.

11. Ein Verfahren zur Herstellung eines Lagerbehälters für umweltschädliche Flüssigkeiten, worin ein Bassin einer geeigneten Tiefe ausgehoben wird, ein Grundbelag in dem Bassin angeordnet und mit Verbindungen für wenigstens ein Zufluß- und Abflußrohr versehen wird,
die Umfangskante des Bodenbelags entlang der oberen Kante des Bassins gesichert wird,
eine oberer Belag angeordnet wird und
die Umfangskante der oberen Kante entlang der oberen Kante des Bassins gesichert wird,
dadurch gekennzeichnet, daß der Erdaushub während des Ausschachtens wenigstens teilsweise zur Bildung eines Damms um das Bassin herum verwendet wird,
daß zwischen dem oberen Belag und dem unteren Belag, benachbart zu dessen Umfangskanten, Gasentladungsmittel angeordnet werden,
daß in der Zentralfläche des oberen Belags wenigstens ein Ballastelement angeordnet und eine Wassermasse auf der Folie in einem vorbestimmten Spiegel, bezogen auf den Boden des Bassins, vorgesehen wird.

12. Ein Verfahren nach Anspruch 11, dadurch gekennzeichnet, daß der Wasserspiegel unabhängig von der Menge der im Behälter zu lagernden Flüssigkeit aufrechterhalten wird.

13. Ein Verfahren nach Anspruch 11 oder 12, dadurch gekennzeichnet, daß wenigstens einer der Beläge vor Ort konfektioniert wird.

14. Ein Verfahren nach Anspruch 11, 12 oder 13, dadurch gekennzeichnet, daß ein periphärer Streifen von wenigstens einem der Beläge um ein kreisförmiges Stützmittel gefaltet und in die Erde geführt ist.

15. Ein Verfahren nach einem der Ansprüche 11 bis 14, dadurch gekennzeichnet, daß die Tiefe und die Dimensionen des Bassins derart ausgewählt sind, daß die ausgehobene Erde im wesentlichen dazu verwendet werden kann, einen Damm um das Bassin zu bilden und daß dieser Damm wenigstens teilweise die Seitenwände des Bassins bildet.

## Revendications

1. Réservoir de stockage de liquides dangereux pour l'environnement, lequel réservoir de stockage comprend un bassin excavé pourvu d'une pellicule de fond, d'une deuxième pellicule qui est disposée au-dessus de la pellicule de fond et d'au moins une conduite d'alimentation et d'évacuation des liquides à stocker, dans lequel ladite au moins une conduite possède au moins une ouverture de sortie et une ouverture d'entrée entre la pellicule de fond et la deuxième pellicule en vue respectivement d'amener et d'évacuer le liquide à stocker en direction et en provenance de l'espace ménagé entre la pellicule de fond et la deuxième pellicule **caractérisé en ce** qu'en service, une masse d'eau propre est disposée sur la deuxième pellicule et en ce que des moyens sont destinés à maintenir le niveau de la masse d'eau essentiellement constant par rapport au fond du bassin.

2. Réservoir de stockage selon la revendication 1, **caractérisé en ce** qu'en service, le niveau d'eau est maintenu constant indépendamment de la quantité de liquide stockée dans le réservoir.

3. Réservoir de stockage selon la revendication 1 ou 2, **caractérisé en ce** qu'en service, à hauteur du bord circonférentiel de la pellicule de fond et de la pellicule supérieure, est disposée entre les deux pellicules au moins une conduite d'évacuation des gaz en vue d'évacuer les gaz libérés du liquide à stocker.

4. Réservoir de stockage selon la revendication 1, 2 ou 3, **caractérisé en ce** que la pellicule supérieure, dans sa région centrale, a été chargée avec au moins un élément de lest.

5. Réservoir de stockage selon la revendication 4, **caractérisé en ce** que l'élément de lest est en béton.

6. Réservoir de stockage selon l'une quelconque des revendications 3 à 5, **caractérisé en ce** la conduite d'évacuation des gaz comprend une ligne périphérique s'étendant le long du bord supérieur du réservoir.

7. Réservoir de stockage selon la revendication 6, **caractérisé en ce** la ligne annulaire forme également un élément de support pour le bord circonférentiel d'au moins une des pellicules.

8. Réservoir de stockage selon l'une quelconque des revendications 3 à 7, **caractérisé en ce** que la conduite d'évacuation comprend un canal formé dans un bord en béton, lequel canal communique avec des tuyaux qui ont été passés à travers au moins une des pellicules.

9. Réservoir de stockage selon l'une quelconque des revendications précédentes, **caractérisé en ce** que les moyens pour garder le niveau de la masse d'eau essentiellement constant comprennent au moins un tropplein et au moins un tuyau d'évacuation pour l'eau qui lui est raccordé et au moins un tuyau d'alimentation pour l'eau.

10. Réservoir de stockage selon l'une quelconque des revendications précédentes, **caractérisé en ce** que les moyens pour garder le niveau de la masse d'eau essentiellement constant comprennent un flotteur et un moyen d'alimentation d'eau commandé par le flotteur.

11. Procédé de fabrication d'un réservoir de stockage de liquides dangereux pour l'environnement, dans lequel un bassin de profondeur adéquate est creusé, une pellicule de fond est disposée dans le bassin, laquelle pellicule est pourvue de connexions pour au moins une conduite d'alimentation et une conduite d'évacuation;
le bord circonférentiel de la pellicule de fond est fixée le long du bord supérieur du bassin;
une pellicule supérieure est disposée;
le bord circonférentiel de la pellicule supérieure est fixé le long du bord supérieur du bassin;
**caractérisé en ce** que la terre extraite durant l'excavation est utilisée, du moins partiellement, pour former un talus autour du bassin;
qu'entre la pellicule supérieure et la pellicule de fond, à proximité du bord circonférenntiel de celles-ci sont disposés des moyens d'évacuation des gaz;
que dans la région centrale de la pellicule supérieure est disposé au moins un élément de lest et
qu'une masse d'eau est prévue sur la pellicule supérieure à un niveau prédéterminé par rapport au fond du bassin.

12. Procédé selon la revendication 11, **caractérisé en ce** que le niveau d'eau est maintenu constant, indépendamment de la quantité de liquide stockée dans le réservoir.

13. Procédé selon la revendication 11 ou 12, **caractérisé en ce** qu'au moins une des feuilles est confectionnée sur place.

14. Procédé selon la revendication 11, 12 ou 13, **caractérisé en ce** qu'une bande périphérique d'au moins une des pellicules est repliée sur un élément de support circonférentiel et enterrée dans le sol.

15. Procédé selon l'une quelconque des revendications 11 à 14, **caractérisé en ce** que la profondeur et les dimensions du bassin sont sélectionnées de telle manière que la terre extraite puisse essentiellement être utilisée pour former un talus autour du bassin, ledit talus formant, du moins partiellement, les parois latérales du bassin.
